# EUROPEAN PATENT APPLICATION

(11) **EP 1 193 621 A2**
(43) Date of publication of application: **03.04.2002**
(21) Application number: 01123598.3
(22) Date of filing: 01.10.2001
(51) Int. Cl.: G06F 17/30

(54) **Automatically identifying a telephone number in electronic text**

(30) Priority: 02.10.2000 US 237329 P; 13.09.2001 US 951095
(71) Applicant: MICROSOFT CORPORATION, Redmond, Washington 98052-6399 (US)
(72) Inventor: Newman Enns, Neil Robin, Redmond, WA 98052 (US)
(74) Representative: Grünecker, Kinkeldey, Stockmair & Schwanhäusser Anwaltssozietät

(57) **Abstract**

Automatically identifying a telephone number included in electronic text. Electronic text is searched for the start of a potential telephone number. If the start of a potential telephone number is located, electronic text is then searched for the end of a potential telephone number. If both the start and end of a potential telephone number are located, analysis is performed on the text between and inclusive of the start and end of the potential telephone number, to determine if the potential telephone number is truly a telephone number. The analysis may include, checking how many digits are in a potential telephone number, if the potential telephone number is actually a currency amount, and if the potential telephone number is actually a date. Once a telephone is identified, it is made available for other processing, such as being hyperlinked.

## Description

### BACKGROUND OF THE INVENTION

### 1. Cross-Reference to Related Applications

The present application claims priority from United States provisional patent application Serial Number. 60/237,329, filed October 2, 2000 and entitled "Phone Number Detection Algorithm," which provisional application is incorporated herein by reference in its entirety.

### 2. The Field of the Invention

The present invention relates to automatically identifying telephone numbers. More specifically, the present invention relates to methods, systems, and computer program products for automatically identifying a telephone number included in a stream or body of text.

### 3. Background and Relevant Art

The computing age has fostered unprecedented growth in global communications. This growth is substantially due to technological advances in networking, which enable large numbers of diverse computing devices to interconnect and interoperate. Such interconnection and interoperation are, in turn, due to advances in computing devices, such as devices with smaller processors and expanded memory capabilities, advances in addressing techniques, and advances in development of the World Wide Web.

As processing and memory capabilities have advanced, smaller and smaller computing devices have become available, which often exceed the capabilities of their predecessors. Current processor and memory technologies have advanced to a point where some mobile computing devices, such as mobile telephones, pagers, and personal digital assistants (PDAs), include a large portion of the functionality of general-purpose computers. These mobile computing devices may allow users to communicate remotely, over wireless links, as if they were physically connected to the network.

To facilitate meaningful communication on a network each device included on the network must have a unique address. Computing devices within a computer network may have unique Internet Protocol ("IP") addresses. An IP address is a thirty-two bit number separated by three periods into four eight bit numbers, each ranging from zero to 255. An IP address is often associated with a more human-readable Uniform Resource Locator (URL). A typical form of a URL is "www.domain_name.com", where the "domain_name" is typically replaced by a memorable text string.

In order to allow for convenient navigation of the World Wide Web, URLs included in a document are often expressed in the form of hyperlinked text. When a user selects hyperlinked URL, the browser is configured to navigate to the corresponding web page identified by the URL. Hyperlinking offers some distinct advantages over user-initiated instructions. For example, instead of having to enter a URL in a command line which may involve copying, pasting, or perhaps scrolling, and then submitting the URL by, for example, depressing a "GO" icon, the user need only select the hyperlink. Similarly, the user need not worry about typing or copying the exact URL correctly since the document author ordinarily supplies the URL in the hyperlink correctly.

Typically, hyperlinking is limited to text that is predetermined to be hyperlinked or written in as a hyperlink by a document writer. However in some instances, an application or operating system may immediately recognize particular text and automatically hyperlink that text. Computers can often recognize URLs and electronic mail addresses since these addresses tend to follow certain conventions. For example, a URL may begin with the alphanumeric text "www" followed by a period ".", followed by some other alphanumeric text, followed by a period ".", and ending in one of several predefined domains of which ".com", ".edu", and ".gov" are examples. Similarly, electronic mail addresses used on the Internet are characterized by alphanumeric text, representing a user name, followed by the symbol "@," followed by additional alphanumeric text, which represents an associated computer system. As a result, conventional technology may be employed to automatically hyperlink recognized URLs or electronic mail addresses included anywhere in a message or document. Automatic hyperlinking is typically limited to URLs and Internet electronic mail addresses, which adhere to conventional predefined naming techniques.

Conventionally, telephone numbers have only been hyperlinked when hard coded by a document author. That is, if the telephone number is in a particular place in a document, such as in an electronic telephone directory having a preset format, the telephone number may appear hyperlinked. A user may then select the hyperlinked telephone number and attempt communication with the telephonic device associated with that number. Thus, conventional technology allows for the hyperlinking of a telephone number if it is already known that it is indeed a telephone number.

The number of mobile computing devices capable of communicating remotely with a network and utilizing a telephone number as an address is becoming more common. In addition, the number of mobile computing devices that are able to dial a telephone number to engage in telephonic communication is also increasing. Therefore it would be of benefit to automatically recognize a telephone number included in a stream or body or text so that automated functions for the telephone number may be offered.

However, telephone numbers present special problems not found in addresses such as URLs and electronic mail addresses, which make the automatic recognition of a telephone number difficult. One of the problems associated with correctly identifying telephone numbers is that telephone number formats may vary widely from country to country and may vary widely within different parts of the same country. Thus, attempting to automatically hyperlink a potential telephone number may result in erroneously hyperlinking text that is not a telephone number, or may result in the failure to create a hyperlink where a valid telephone number exists.

Telephone numbers may embody preceding characters such as "+", may have portions enclosed by parentheses, and may have separate number codes separated by a dash "-", a space " " and a period ".". For example, an acceptable United States telephone number may be (123) 456 7890, (123)-456-7890, 123.456.7890, or simply 456-7890. By comparison, an acceptable British telephone number may be 01234 567890, and a Denmark telephone number may be +45 1234 5678. Further complications arise when telephone numbers resemble a date (1-10-2000) or a currency amount ($1000000) in length or format.

Therefore, what are desired are systems, methods, and computer program products for automatically identifying a telephone number randomly situated within a stream or body of text, such as the body of an electronic mail message.

### BRIEF SUMMARY OF THE INVENTION

The principles of the present invention provide for automated identification of a telephone number included in a stream or body of electronic text. Optionally, other operations, such as hyperlinking an identified telephone number, may be performed to increase the efficiency of computing devices that use the identified telephone number. Identification of a telephone number is facilitated by finding the start of a potential telephone number, finding the end of a potential telephone number, and determining whether the characters between the start and end of the potential telephone number are indeed a telephone number.

By way of example, finding the start of a potential telephone number may include searching individual characters within the electronic text for numerical digits between 0 and 9. If a numerical digit is found, this may indicate the beginning of a potential telephone number. However, other criteria, in addition to simply finding a numerical digit, may need to be met before indication of the start of a potential telephone number is made.

In one embodiment, after a numerical digit is found, the character immediately preceding the numerical digit is checked. If the preceding character is found to be a currency symbol, all digits subsequent to the currency symbol are assumed to be a numerical value associated with the currency symbol. Thus, there is a reduced chance of incorrectly identifying currency values, such as $1,234,567,890 or £1,234,567,890, as telephone numbers. If the preceding character is not a currency symbol the character is indicated as the starting position of the potential telephone number. Indicating the start of a potential phone number by a non-numerical character that is not a currency symbol reduces the chance of ignoring possibly valid telephone numbers such as, +1 (234) 567-8901 or (123) 456-7890.

Finding the end of a potential telephone number may include continuing to check characters until a character or sequence of characters indicates the end of the potential telephone number. If the character followingthe first numerical digit is the beginning of a set of contiguous numerical digits, which are not separated or are separated by only valid separator characters such as, one space, one dash, one period, or one parenthesis, then the method continues to search until it finds the end of the potential telephone number. The end of the potential telephone number may be indicated by any non-numerical character that is not a valid separator character or may be indicated by one or more predetermined stop sequences of characters, including double spaces, an adjacent space and dash, and an adjacent space and period, and the like. The potential telephone number may be a numerical segment including the character preceding the starting numerical digit and all subsequent characters up to the character or predetermined stop sequence that indicated the end of the potential telephone number. Thus, the characters included in a numerical segment may include at least one or more numerical strings separated by certain valid separator characters.

After the end of a potential telephone number is located, further analysis may be performed to determine if the characters included in a numerical segment are indeed a telephone number. In one embodiment, this further analysis may include determining the total number of digits in the numerical segment. If there are more than six digits included in the numerical segment, the numerical segment may be considered a telephone number. If there are less than six digits included in the numerical segment, the numerical segment is not considered a telephone number. The majority of telephone numbers used worldwide include six or more digits. Thus, eliminating numerical segments including less than six digits reduces the chances of erroneous identifying a numerical segment as a telephone number where no valid telephone number is included in a stream or body of electronic text.

In another embodiment further analysis may include checking the starting character of the numerical segment. If the starting character is a "+", "(", or other character that may be used to start a telephone number, the character remains in the numerical segment. If the starting character is a space, it is trimmed. Any spaces that follow the last numerical digit of a numerical segment may be trimmed as well.

Where special characters may indicate a numerical segment as a web URL or other non-telephone numerical segment, further analysis may include determining the number of numerical digits within each of the numerical strings included in a numerical segment. For example, if the overall number of characters in a segment is six characters or eight characters in length, the number may be a date, such as 02-02-02 or 02-02-2002. The individual numerical strings within the numerical segment, such as 02 or 2002, may then be compared with numerical strings included in a numerical segment that is a proper telephone number, such as 200-2002 or 200-200-2002. Thus, where a string length of two, 02, appears where a string length of three, 200, is expected for a valid telephone number, the numerical segment may be ignored.

If, by virtue of further analysis, a numerical segment is identified as a valid telephone number, other functions may be performed on the identified telephone number. Functions performed on an identified telephone number may include hyperlinking the telephone number, such that selection of the hypertext link results in performing appropriate actions for a telephone number. For example, a user may select the hyperlinked telephone number to automatically dial the telephone number. Hyperlinking a telephone number promotes efficiency in communication by reducing the number of user operations needed to initiate communications with other telephonic devices.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1A illustrates an exemplary mobile computing device that provides a suitable operating environment for the present invention.

Figure 1B illustrates an exemplary network system that provides a suitable operating environment for the present invention.

Figure 2 is a flow chart illustrating a method for automatically identifying a telephone number included in electronic text.

### DETAILED DESCRIPTION OF THE PREFERRED EMBODIMENTS

The present invention extends to systems, methods, and computer program products for automatically identifying a telephone number included in a stream or body of text so as to allow a user or a computing device to more easily communicate with devices associated with an identified telephone number. When checking a stream or body of text for potential telephone numbers, the text is analyzed in an attempt to locate the start of potential telephone numbers. If the start of a potential telephone number is located, a portion of text beginning with the start of the potential telephone number is analyzed in an attempt to locate the end of the potential telephone number. If the start and end of a potential telephone number are located, analysis is performed on a portion of text between and including the start and end of the potential telephone number to determine if the potential telephone number is indeed a telephone number.

The embodiments of the present invention may comprise a special purpose or general purpose computing device including various computer hardware, as discussed in greater detail below. Embodiments within the scope of the present invention also include computer-readable media for carrying or having computer-executable instructions or data structures stored thereon. Such computer-readable media may be any available media, which is accessible by a general purpose or special purpose computer. By way of example, and not limitation, such computer-readable media can comprise physical storage media such as RAM, ROM, EPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer.

When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

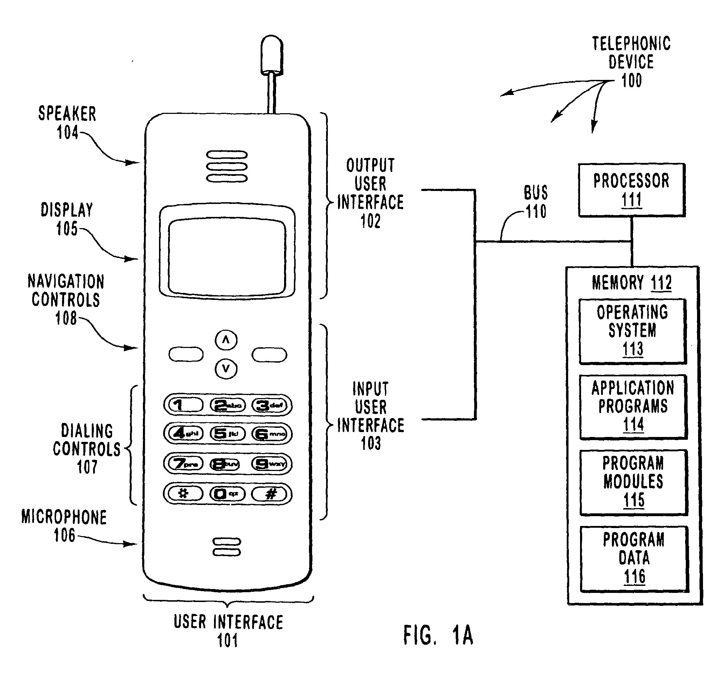

Figure 1A and the following discussion are intended to provide a brief, general description of a suitable computing environment in which the invention may be implemented. Although not required, the invention will be described in the general context of computer-executable instructions, such as program modules, being executed by computing devices. Generally, program modules include routines, programs, objects, components, data structures, and the like that perform particular tasks or implement particular abstract data types. Computer-executable instructions, associated data structures, and program modules represent examples of the program code means for executing steps of the methods disclosed herein. The particular sequences of such executable instructions or associated data structures represent examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where local and remote processing devices that are linked (either by hardwired links, wireless links, or by a combination of hardwired or wireless links) through a communications network perform tasks. In a distributed computing environment, program modules may be located in both local and remote memory storage devices.

With reference to Figure 1A, a suitable operating environment for the principles of the invention includes a general-purpose computing device in the form of a telephonic device 100. The telephonic device 100 includes a user interface 101 for allowing a user to input information through an input user interface 103, and review information presented via an output user interface 102.

For example, the output user interface 102 includes a speaker 104 for presenting audio information to the user, as well as a display 105 for presenting visual information to the user. The telephonic device 100 may also have an antenna 109 if the telephonic device 100 has wireless capabilities.

The input user interface 103 may include a microphone 106 for rendering audio information into electronic form. In addition, the input user interface 103 includes dialing controls 107 represented by 12 buttons through which a user may enter information. Input user interface 103 also includes navigation control buttons 108 that assist the user in navigating through various entries and options listed on display 105.

Although the user interface 101 has the appearance of a mobile telephone, the unseen features of the user interface 101 may allow for complex and flexible general-purpose processing capabilities. For example, the telephonic device 100 also includes a processor 111 and a memory 112 that are connected to each other and to the user interface 101 via a bus 110. The memory 112 generically represents a wide variety of volatile and/or non-volatile memories that may be employed. The particular type of memory used in the telephonic device 100 is not important to the present invention.

Program code means comprising one or more program modules may be stored in memory 112. The one or more program modules may include an operating system 113, one or more application programs 114, other program modules 115, and program data 116.

While Figure 1A represents a suitable operating environment for the present invention, the principles of the present invention may be employed in any device that is capable, with suitable modification if necessary, of implementing the principles of the present invention. The environment illustrated in Figure 1A is illustrative only, and by no means represents even a small portion of the wide variety of environments in which the principles of the present invention may be implemented.

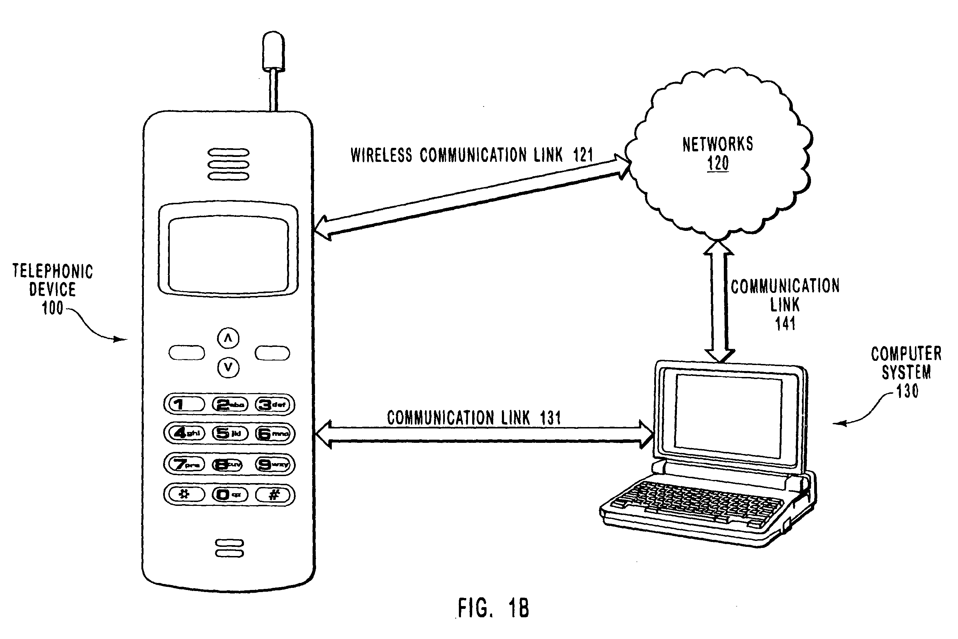

Figure 1B illustrates telephonic device 100 in communication with resources from which telephonic device 100 may receive content. Telephone device 100 may communicate with networks 120 over wireless communication link 121. Networks 120 may include the cellular or digital network used by telephonic device 100 for voice communications, the Internet, other proprietary networks that generate content, or any combination thereof. When communicating over wireless communication link 121, telephonic device 100 may receive content from data generating locations included on networks 120, such as applications running at a cellular or digital service provider, an Internet service provider, or other proprietary networks. The content received by telephonic device 100 may include sports scores, news, telephone numbers included in the electronic text of Web pages or other documents, or other content of interest to the user of telephonic device 100.

Telephonic device 100 may also communicate with computing device 130 over communication link 131. Computing device 130 may be a special-purpose or general-purpose computing device, such as a personal computer, which includes various computer hardware, as previously discussed. Communication links 131 and 141 may be wireless links, hardwired links, or combinations thereof.

Figure 1B is merely illustrative of one embodiment in which the principles of the present invention may be practiced. Telephonic device 100 may be configured to receive content only from networks 120, only from computer system 130, or from both of these locations. Alternatively or in addition, the content may be internally generated by one of the application programs 114 executed locally on the telephonic device 100. Additionally, it may be the case that telephonic device 100 is configured to receive content from other locations, either singly, or in combination with networks 120, computer system 130, or both networks 120 and computer system 130.

One type of content that telephonic device 100 may receive is electronic text. Electronic text includes a body of text, such as a file, document, message, graphic, Web page, or other element that may include text, stored in a storage location included in a computing device. Examples of storage locations are magnetic hard disks and system memory, such as memory 112. However, the actual entity including the electronic text and the storage location of the electronic text is not important to practice of the present invention.

Streaming is a technique for transferring content such that it can be processed as a steady and continuous stream. Streaming technologies have become increasingly important with the growth of the Internet because many computing devices do not have fast enough access to download large files quickly. With streaming, a computing device may perform operations on received portions of a contiguous set of content before transfer of the complete set of contiguous content occurs.

"Streaming text," is text that is received using a streaming technique. Streaming text may ultimately be included in a file, document, message, graphic, Web page, or other element that may include text. For example, a computing device may need to receive fifty characters of text included in an electronic mail message, but is only capable of receiving groups of five characters simultaneously due to the computing device's access speed. In this instance, the computing device may perform operations on the first group of characters before the second group of characters is received, on the first and second groups of characters before the third group of characters is received, and so forth. In the description and following claims, "electronic text" includes any body of text including streaming text.

Encoding electronic text involves assigning each character a unique number. When a device interprets a number associated with a specific character, it knows it is performing operations on the associated character. For instance, the character "a" may be represented by the hexadecimal value 61. If a device is performing character operations and receives a hexadecimal value of 61, the device will know it is performing an operation on the letter "a."

Electronic text may be encoded using virtually any technique that corresponds a number to the representation of a text character. However, some encoding techniques are more common. The American Standard Code for Information Exchange ("ASCII") character set is a code for representing English characters, with each letter assigned a number between 0 and 127. The ISO Latin 1 character set is a superset of the ASCII character set, with each letter assigned a number between 0 and 255. Having more numbers available for assignment increases the number of different characters available to a user of a character set. This may allow a character set to include special symbols and may allow one character set to be used between different languages. Both the Hypertext Transfer Protocol ("HTTP") and Hypertext Markup Language ("HTML") used on the World Wide Web are based on the ISO Latin-1 character set.

The ANSI character set is a collection of special characters and associated codes adopted by the American National Standards Institute. The ANSI character set includes characters for many different languages, special punctuation, and business symbols.

Unicode is a standard for representing characters, which may assign more than 65,000 unique characters. Unicode was developed to promote interoperability between programs and platforms that may currently be using differing encoding techniques. There is a risk when using different encoding techniques that the same number may represent different characters or that different numbers may represent the same character. Since Unicode may represent over 65,000 unique characters all the characters of most languages, including Greek, Chinese, and Japanese, may be included in one character set.

In the description and following claims reference may be made to the text encoding techniques and character sets discussed above. However, the present invention is not limited to these text encoding techniques or character sets. It would be apparent to one skilled in the art, after having reviewed this description, that a wide variety of text encoding techniques and character sets may be used to implement the principles of the present invention

Telephone numbers may include a number of different characters such as the digits "0" through "9", an opening parenthesis "(", a closing parenthesis ")", a dash "-", a period, ".", a plus symbol "+" or the like. Telephone numbers may also include a space, which may be generated by pressing the space bar on a standard keyboard. In the description and following claims, a "numerical digit" is defined as any character from 0 through 9 inclusive. In the description and following claims, a "separator character" is defined as a character that may separate one character from another character in the text of a telephone number. Separator characters may include, but are not limited to, the characters from 0 through 9, an opening parenthesis "(", a closing parenthesis ")", a dash "-", a period, ".", or a space. In the telephone number, 1 (234) 555-6789, all the characters, except the 1 that starts the telephone number and the 9 that ends the telephone number, may be considered separator characters. In the description and following claims, a "non-numerical separator character" is defined as any separator character that is not a numerical digit. In the description and following claims, "whitespace" is defined as all characters that appear as blanks on a display device. Whitespace may include a space or any other character, such as the tab character and null character, which do not have a visual form.

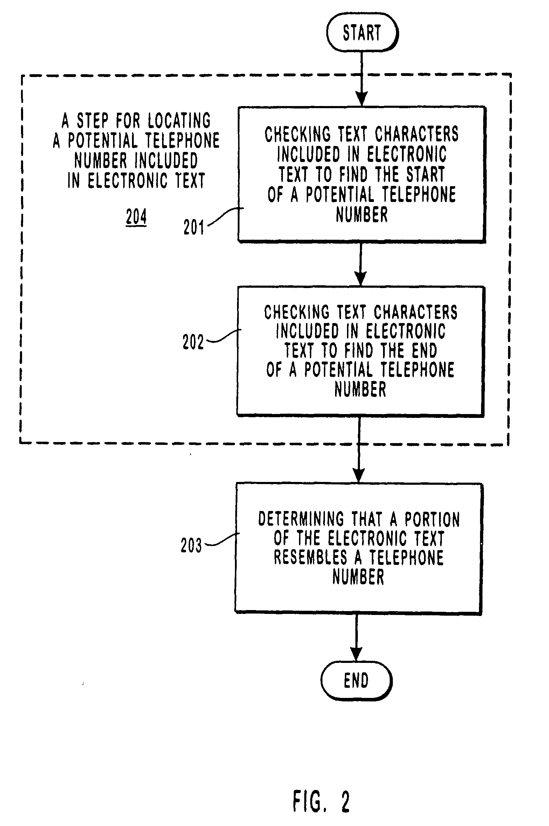

Figure 2 is a flow chart illustrating a method for identifying a telephone number that is included in electronic text. The method begins by performing a step for locating a potential telephone number included in electronic text (step 204). In one embodiment, this step may include performing the acts of checking text characters included in electronic text to find the start of a potential telephone number (act 201) and checking text characters included in electronic text to find the end of the potential telephone number (act 202). The method then proceeds to determine that a portion of the electronic text resembles a telephone number (act 203).

Performance of acts 201, 202, and 203 will be described in the context of a routine developed in C++ code that may identify a telephone number included in electronic text. The following description is illustrative only. It would be apparent to one skilled in the art, after having reviewed this description, that a wide variety coding languages and techniques may be used to implement the principles of the present invention. In describing the code, certain groups of instructions will be presented and discussed. The instructions are grouped together to perform a certain function or simply to make the description of the code more understandable. These groups of instructions, when combined together would create one example of code that may identify a telephone number included in electronic text when executed. When a sole period is encountered on three consecutive lines, this represents that some instructions are temporarily disregarded for clarity.

The first group of instructions illustrates a routine receiving the location of electronic text from an external program and defining variables.

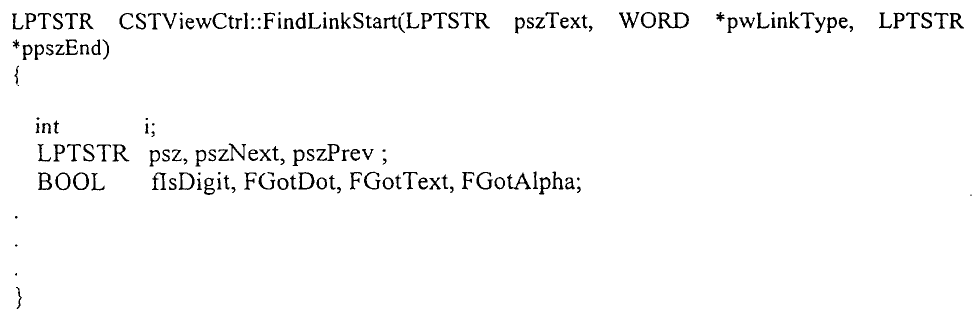

In the preceding group of instructions, a routine labeled "FindLinkStart" receives an input value that may be stored in the variable pszText, which is a variable of the type LPTSTR. The variable type LPTSTR defines associated variables as pointers to a memory location. Thus, if "FindLinkStart" receives a numerical value for the variable pszText, this value may be associated with the address of a memory location. In this instance, it will be assumed that the value received in pszText is the memory location of the beginning of some electronic text. "FindLinkStart" may also return two variable values to an external program, a WORD value stored at the address associated with the value of pwLinkType and a pointer value stored at the address associated with the value of ppszEnd. The pwLinkType variable may return to an external program the type of link that was identified, such as a telephone number, electronic mail address, or URL. The ppszEnd may return to an external program the memory address of the end of an identified link. For instance, if the identified link was the telephone number "555-1213", ppszEnd would return the memory address of the number 3.

The group of instructions then defines a series of variables the routine will use. The variable "i" is defined as an integer, the variables psz, pszNext, pszPrev are defined as pointers, and the variables fIsDigit, fGotDot, fGotText, fGotAlpha are defined as Boolean. These defined variables will be discussed below as they are used by the routine.

The routine may then include instructions for searching the characters of the electronic text referenced by pszText to find the start of a potential telephone number (act 201).

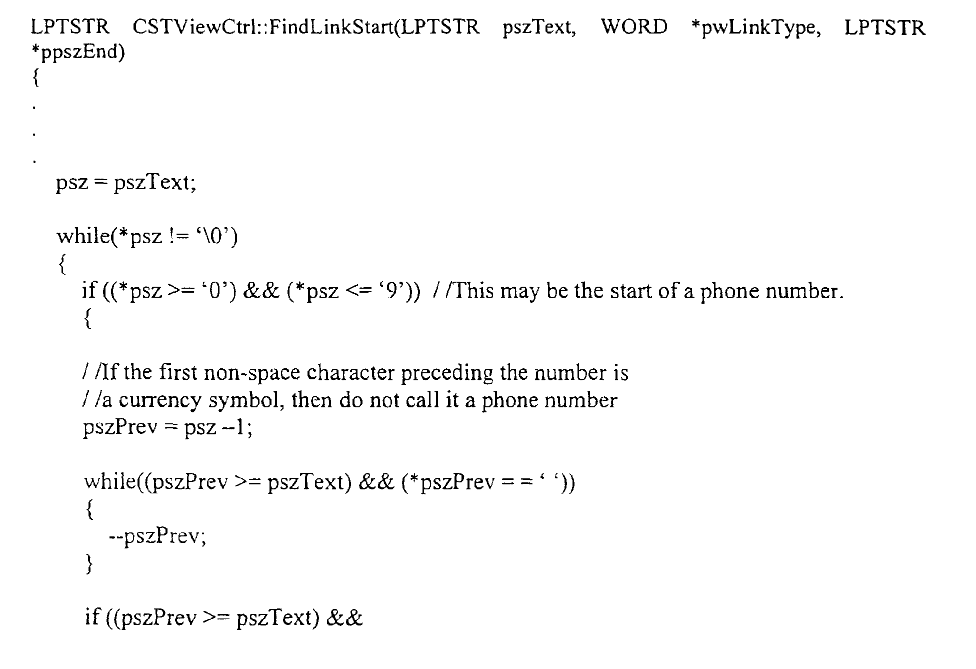

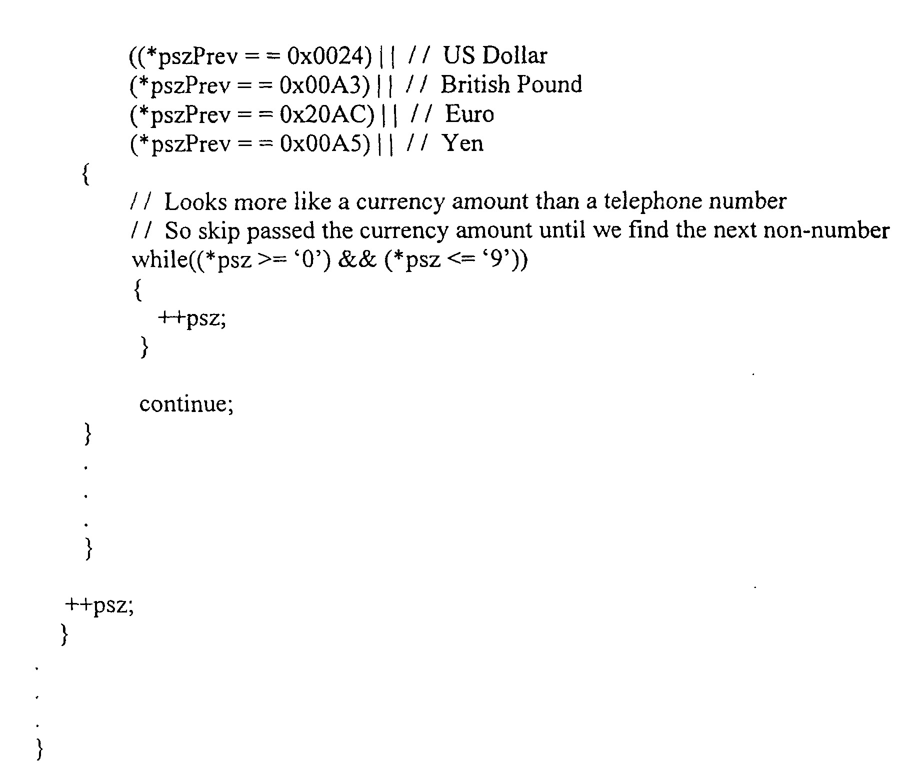

This group of instructions begins by setting the value of the variable psz equal to the value of pszText. Thus, psz may also be associated with the memory address of the beginning of the electronic text that pszText is associated with. Next, a while loop is started and instructions inside the while loop are repeatedly executed in sequential order as long as the value of a character stored in the memory address pointed to by psz does not equal '\0', which is the NULL character. Electronic text is frequently terminated with the use of the NULL character. The NULL character is encoded in most character sets as a hexadecimal 0. Thus, when the value in the memory location pointed to by psz becomes equal to the NULL character, the routine assumes this is the end of the electronic text and no longer executes the instructions inside the while loop. The "\" character in the while loop is to force the checking of the hexadecimal value of the number. Since the NULL character is not displayable it must be checked this way.

Assuming the value of the first character pointed to by psz is not the NULL character, the routine proceeds to an "if" statement to determine if the character is a numerical digit. If the value of the first character is greater than or equal to zero and less than or equal to nine, the if statement is true and instructions inside the if statement are executed. If the value of the first character is less than zero or greater than nine, the if statement is false and the instructions inside the if statement are not executed.

For example, assume now that the routine is receiving ten characters of electronic text and the routine has found that the seventh character is a numerical digit. In this instance, the variable pszPrev is set to a value one less than psz. Thus, if psz currently points to the seventh character, pszPrev will point to the sixth character. The value of pszPrev is checked to determine if the address associated with pszPrev is still within the electronic text and the value of the character pointed to by pszPrev is checked to see if is a space. If both of these conditions are true, the routine executes a while loop that continually decrements pszPrev until the beginning of the electronic text is reached or a non-space character is found. Decrementing pszPrev may move it beyond the beginning of the electronic text. For instance if psz pointed to the first character, pszPrev would point beyond the beginning of the electronic text.

If a non-space character is found, the routine then executes an if statement checking pszPrev to determine if the address associated with pszPrev is still within the electronic text and to determine if the value of the character pointed to by pszPrev may be a currency symbol. If pszPrev points to a currency symbol, another while loop skips all numerical digits from the location pointed to by psz.

For illustrative purposes, assume further that the routine will receive the ten characters of electronic text in the following sequence, "its $ 512B", and the ten characters are followed by the NULL character. If psz points to the 5, which is the seventh character, pszPrev will point to the space, which is the sixth character. The while loop will be true as pszPrev is not beyond the beginning of the text and the value pointed to by pszPrev is equal to a space. Thus, pszPrev is decremented to point to the $, which is the fifth character. When the while loop executes again, the condition will be false since the value of pszPrev equals '$'. The hexadecimal value for '$' in a variety of character sets, including ISO Latin 1 and Unicode, is 24. Thus, when the if statement is executed, the routine may find that the hexadecimal value pointed to by pszPrev is 24. The instructions inside the if statement include a while loop that continually increments psz until it no longer points to a numerical digit. Thus, the routine will increment psz past the '5', '1', and '2' and begin normally processing characters when it locates the 'B'.

If a numerical digit is found that is not preceded by a currency symbol, the routine may include instructions to check characters included in the electronic text referenced by pszText to find the end of a potential telephone number (act 202).

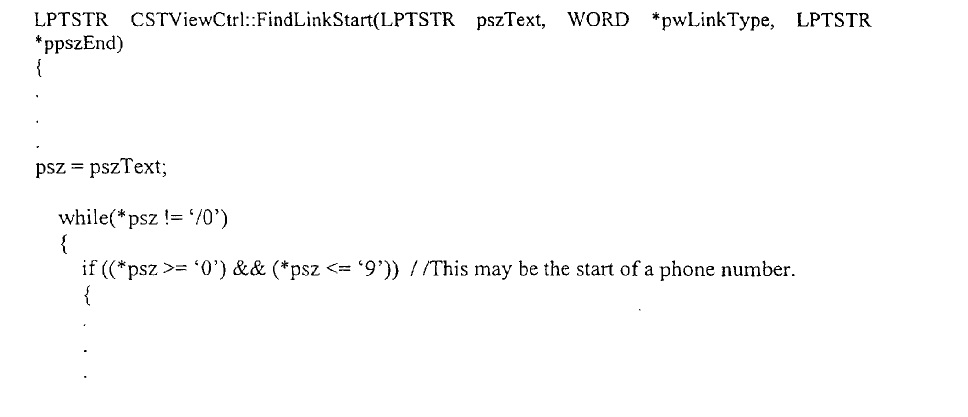

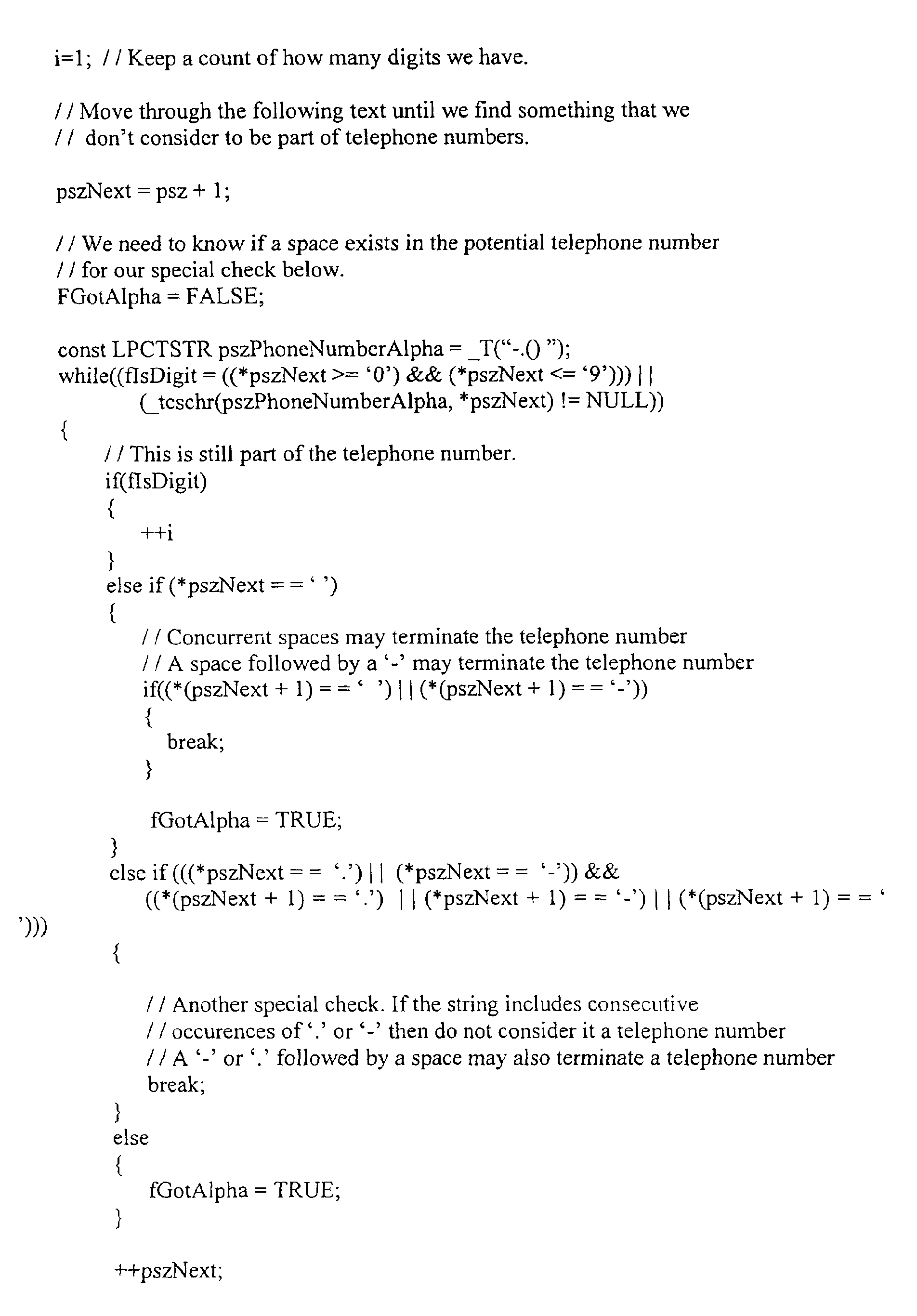

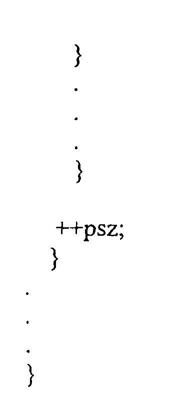

This group of instructions begins be setting the variable "i" equal to one. The variable i used to keep track of the number of numerical digits in a potential telephone number. The variable pszNext is set equal to the value of psz plus one. Thus, pszNext points to the character value immediately subsequent to psz. The Boolean variable FGotAlpha is set equal to FALSE to insure it is initialized to a value that promotes proper operation of the instructions that follow.

Next, the constant pszPhoneNumberAlpha is set equal to the text string "-. ()". The text string includes the space character. Use of the "const" instruction creates the pszPhoneNumberAlpha variable and at the same time specifies that the value of pszPhoneNumberAlpha is a value that will not change during execution of the routine.

A while loop is then executed, which continues to execute as long as the value of the character pointed to by pszNext is a numerical digit or is one of the characters included in pszPhoneNumberAlpha. The instruction "_tcschr" is a call to a function that compares the character pointed to by pszNext to each of the characters in pszPhoneNumberAlpha. If _tcschr does not detect the character pointed to by pszNext in pszPhoneNumberAlpha, it returns a NULL value. If it does detect the character, it returns a non-NULL value. The overall result is that the while loop will continue to execute the instructions inside the while loop, if the character value pointed to by pszNext is a numerical digit, space, -, ., (, or ). If the while loop continues due to detecting a numerical digit, the Boolean variable fIsDigit is set equal to TRUE.

The next instruction is an "if" statement that performs differing functions depending on the values of fIsDigit and pszNext. If fIsDigit is equal to TRUE, meaning the value pointed to by pszNext is a numerical digit, the variable i is incremented. If fIsDigit is not equal to TRUE, meaning the value pointed to by pszNext is a space, -, ., (, or ), special checks are performed to attempt to detect the end of a potential telephone number. If pszNext points to a character value equal to a space, a nested if statement checks the character value pointed to by pszNext plus one, which is the next subsequent character value, to determine if the character value is equal to a space or '-'. If the value pointed to by pszNext plus one is a space or '-', the execution of the instructions within the while loop is terminated by the break instruction. In other words, the routine assumes that the end of a potential telephone number is located if concurrent spaces or a space followed by a '-' is detected. The Boolean variable fGotAlpha is also set to equal to TRUE. Instructions within the while loop also assume the end of a potential phone number is located upon finding a period followed by a space, a dash followed by a space, '..', '.-', '-.', or '--'. If none of the previously described conditions are satisfied fGotAlpha is set equal to TRUE. For instance, if a space is followed by a numerical digit.

The variable pszNext is then incremented so the next character value may be checked.

If the end of a potential telephone number is located, the routine may include instructions to determine that a portion of the electronic text pointed to by pszText resembles a telephone number (act 203).

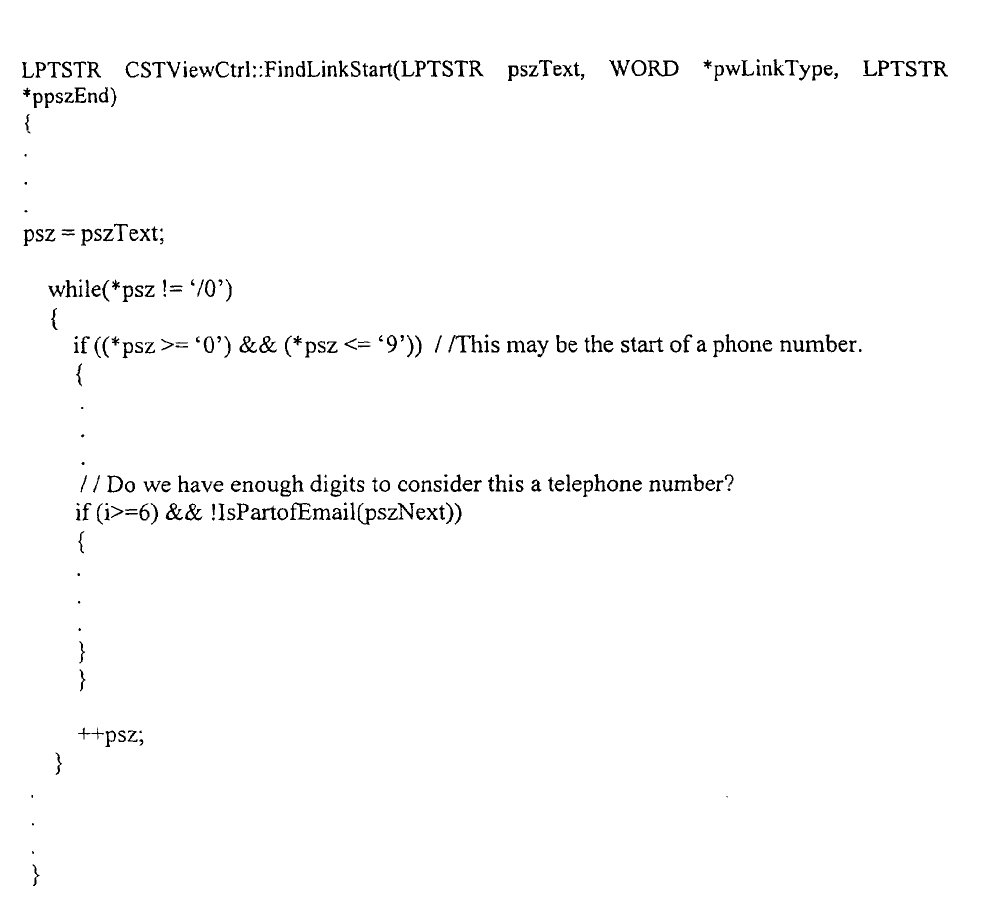

This group of instructions begins by checking all potential telephone numbers that include at least six numerical digits to determine if the numerical digits may be part of an electronic mail address. In this instance, the function "IsPartofEmail" is passed the pszNext variable. Instructions for the "IsPartofEmail" function may be as follows.

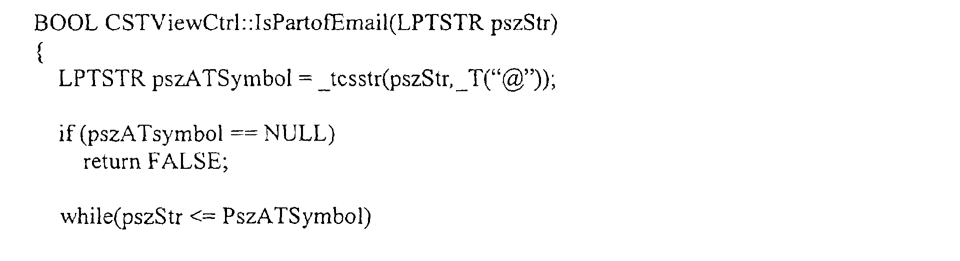

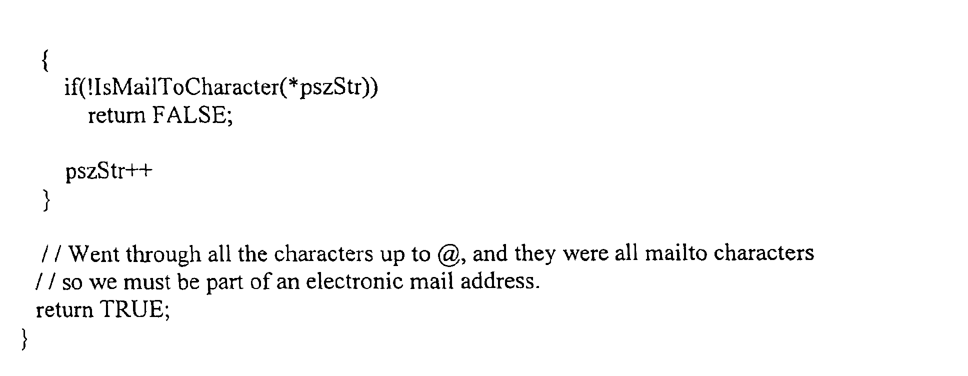

The function "IsPartofEmail" is defined as a Boolean function, meaning it will return either a TRUE or FALSE value to an external program that calls it. The function may receive a value in the pointer variable pszStr, which is a pointer to a string of text. A pointer variable pszATSymbol is defined. The "_tcsstr" function checks the text string pointed to by pszStr to determine if the text string includes the "@" character. If the text string includes the "@" character _tcsstr sets the variable pszATSymbol equal to a value of pszStr plus a number characters indicating the offset from the start of the text string to the location of the "@" character. For example, assume pszStr points to the text string 123456@abcde.com and the numerical value stored is pszStr equals one, which represents the first character of the text string has a memory address of one. In this instance the value of pszATSymbol would be set to equal to seven, which is the memory address of the "@" character. If the "@" is not included in the text string pointer to by pszStr, pszATSymbol is set equal to NULL and the function returns a value of FALSE.

If the text string includes the "@" character, a while loop is executed to check characters from the beginning of the text string to the up to the "@" character. In this instance the function "IsMailToCharacter" is called to determine if characters up to the "@" character are those typically indicative of an electronic mail address. Instructions for the "IsMailToCharacter" may be as follows.

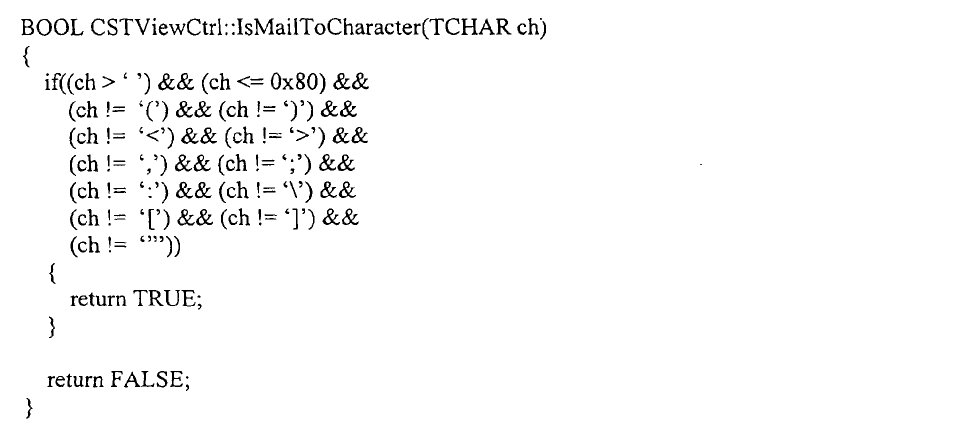

The function "IsMailToCharacter" is defined as a Boolean function, meaning it will return either a TRUE or FALSE value to an external program that calls it. The function includes the ch variable, which receives a character value from an external program. The value of ch is compared to characters that occur in electronic mail addresses. If the value of ch is a character that may occur in an electronic mail address the function returns a TRUE value. If the value of ch is not a character that may occur in an electronic mail address the function returns a FALSE

The function performs an if statement to determine if the value of ch is between a space, which is a hexadecimal 32 in many character sets, and a hexadecimal 80, which represents the end of the printable characters for the English language in many character sets. If the ch character is between a space and a hexadecimal 80 and is not included in any of the other exceptions in the "if" statement, "IsMailToCharacter" returns a TRUE value otherwise it returns a FALSE value. In a variety of character sets, the characters included between hexadecimal 32 and hexadecimal 80 includes, all of the lower and all of the upper case alphanumeric characters, all numerical digits, and other text characters common to a computer keyboard.

Returning back to the discussion of "IsPartofEmail", this function passes each character preceding in the "@" character in the text string pointed to by pszStr to "IsMailToCharacter" to determine if each character may occur in an electronic mail address. If all the characters checked by "IsMailToCharacter" are characters that may occur in an electronic mail address, "IsPartofEmail" returns a TRUE value, meaning the potential telephone number may be an electronic mail address. If any character checked by "IsMailToCharacter" is not a character that may occur in an electronic mail address, "IsPartofEmail" immediately returns a FALSE value, meaning the potential telephone number is probably not an electronic mail address.

Returning back to discussion of the main routine, if the number of numerical digits in a potential telephone number is six or more and the potential telephone number is not part of an electronic mail address, other checks are performed on the potential telephone number.

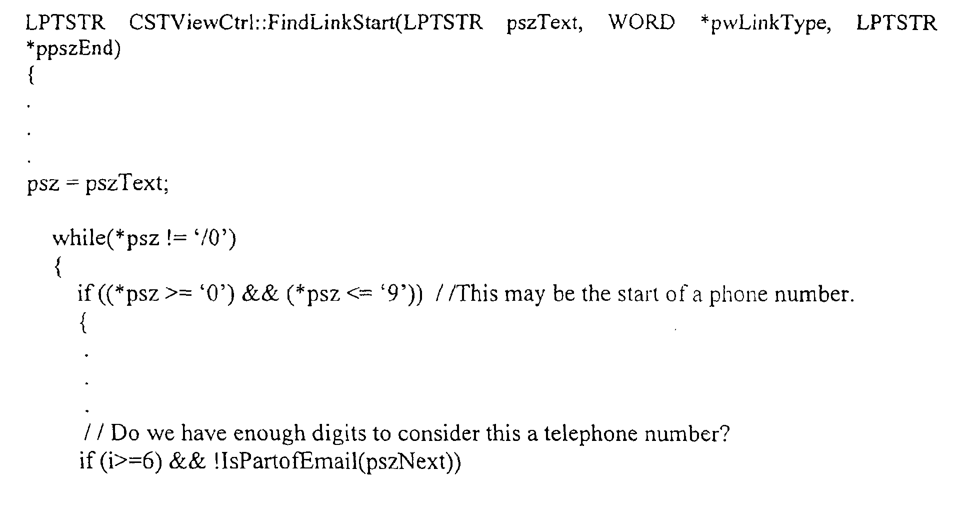

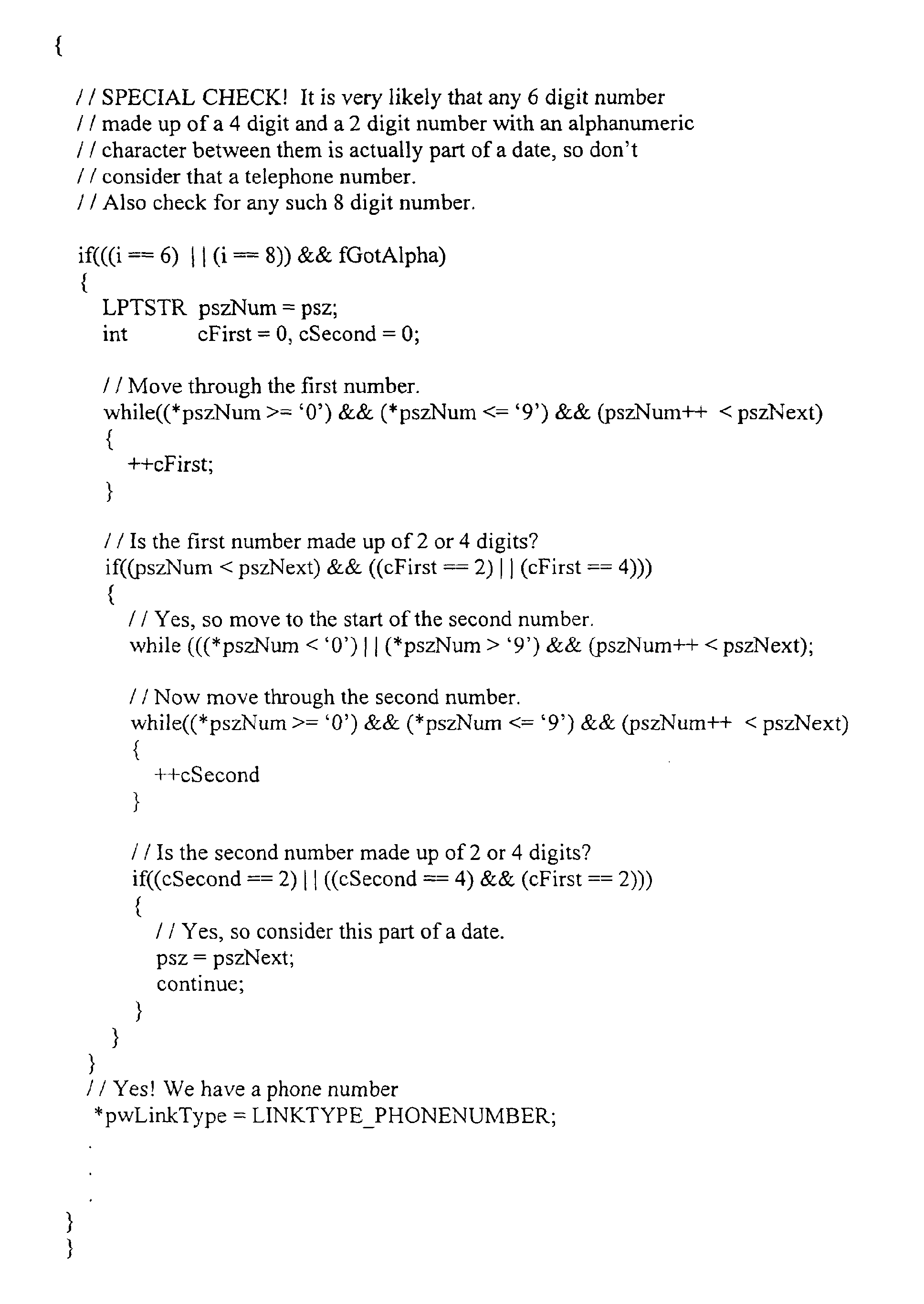

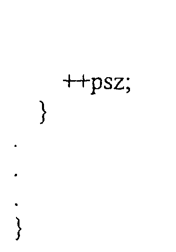

This part of the main routine determines if a potential telephone number is actually a date. If the number of numerical digits in a potential telephone number is six or eight and fGotAlpha is true then the potential telephone number may be a date. The variable fGotAlpha may be set to TRUE by the group of instructions that checks text characters to determine the end of the potential telephone number. FGotAlpha being TRUE means the potential telephone number includes at least one non-numerical digit, which was not found to be the end of the potential telephone number, or the end of the potential telephone number was found by the occurrence of a space followed by a '-'.

A pointer variable pszNum is defined and set equal to the value of psz. Additionally, two integer values, cFirst and cSecond, are defined and initialized to zero. Starting at the beginning, a while loop executes to check each character in the potential telephone number until a non-numerical digit is reached. The number of numerical digits from the beginning of the potential telephone number up until the first non-numerical digit is stored in the variable cFirst. If the cFirst is equal to two or four, meaning there is either two or four numerical digits preceding the first non-numerical digit, other checks may be performed.

If cFirst equals two or four, characters following the first non-numerical digit may be processed until the next numerical digit is found. A while loop executes to check characters until the next numerical digit is located. When a numerical digit is located, characters starting from the located numerical digit may be processed to calculate the number of numerical digits until the end of the potential telephone number or until the next non-numerical digit. A while loop executes, which stores this number of numerical digits in the variable cSecond. If cSecond equals a value of two or cSecond equals a value of four and cFirst equals a value of two, the number is assumed to be a date and not a telephone number. The end result is that numbers such as 02-02-02 and 02-02-2002 will not be identified as potential telephone numbers. On the other hand, numbers such as 45 1234 5678 may still be identified as potential telephone numbers. If a telephone number is located, the link type is set to indicate as such.

Once a telephone number is located optional instructions may be performed to properly format the telephone number. Some telephone numbers may include a non-numerical first digit. For instance, telephone numbers in the United States may begin with a '(', such as (123) 456-7890. To correctly format such a telephone number for further use, the '(' may need to be included as part of the telephone number.

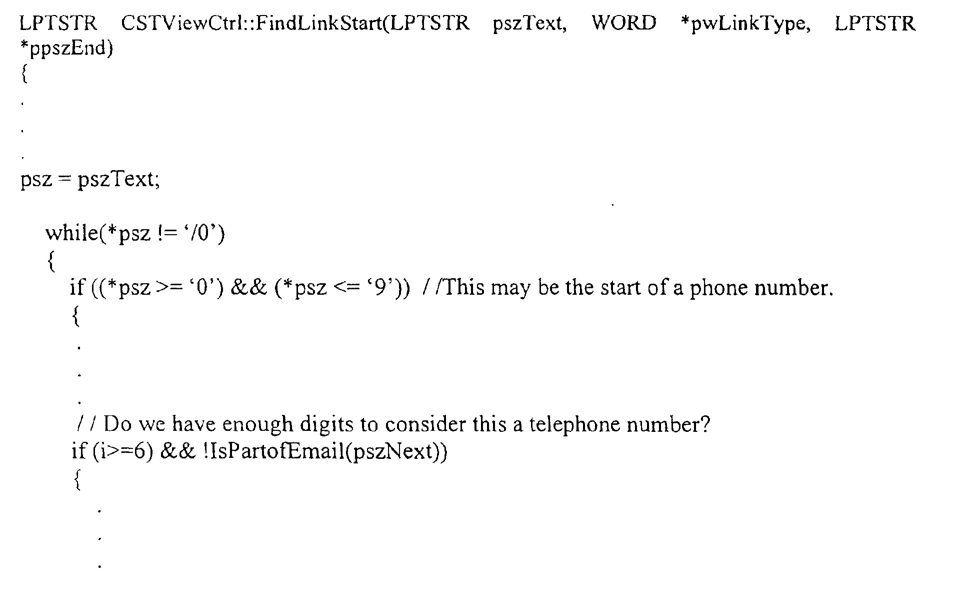

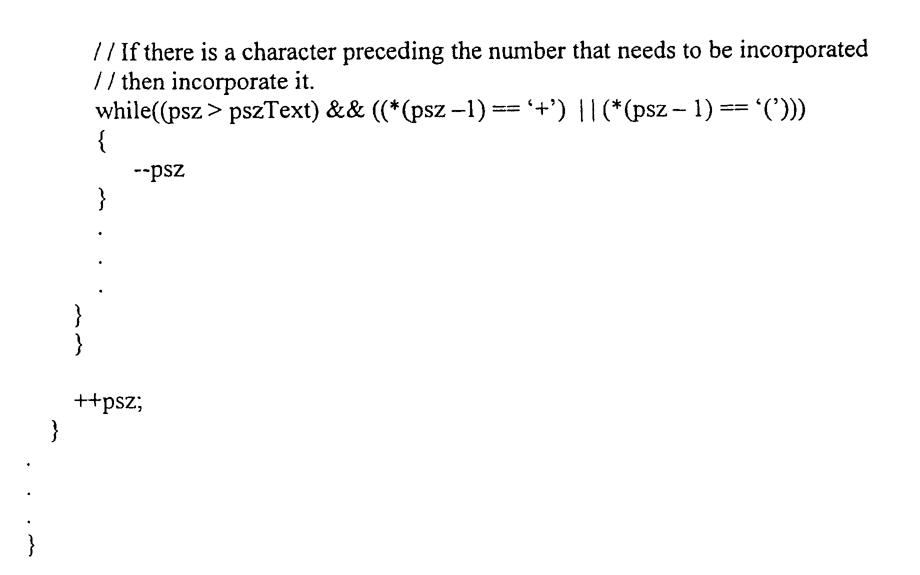

This group of instructions includes a while loop that decrements the memory address stored in psz to include '+' or '(' characters that precede the first numerical digit of a telephone number as part of a telephone number. Thus, when displayed, a number such as (123) 456-7890 may be displayed with the leading '('.

Additionally, a telephone number, as located by execution of the instructions in the routine, may include extraneous separator characters following the last numerical digit.

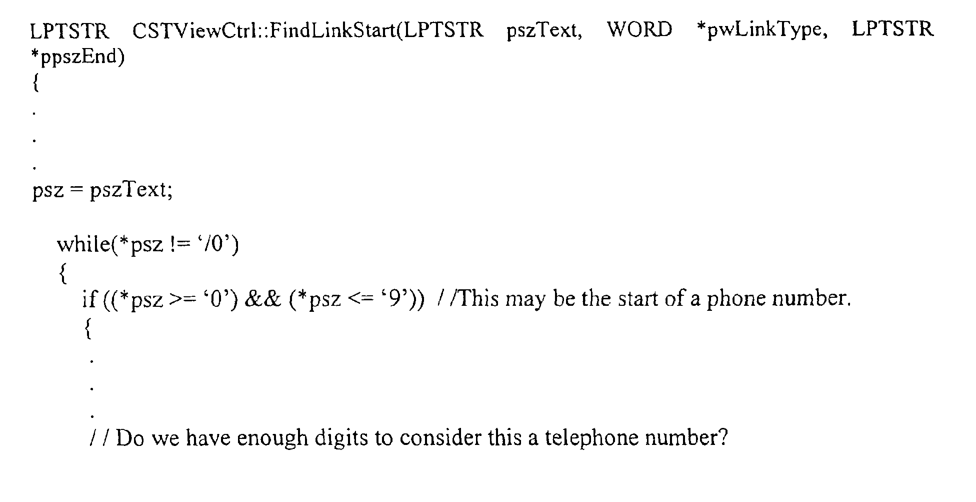

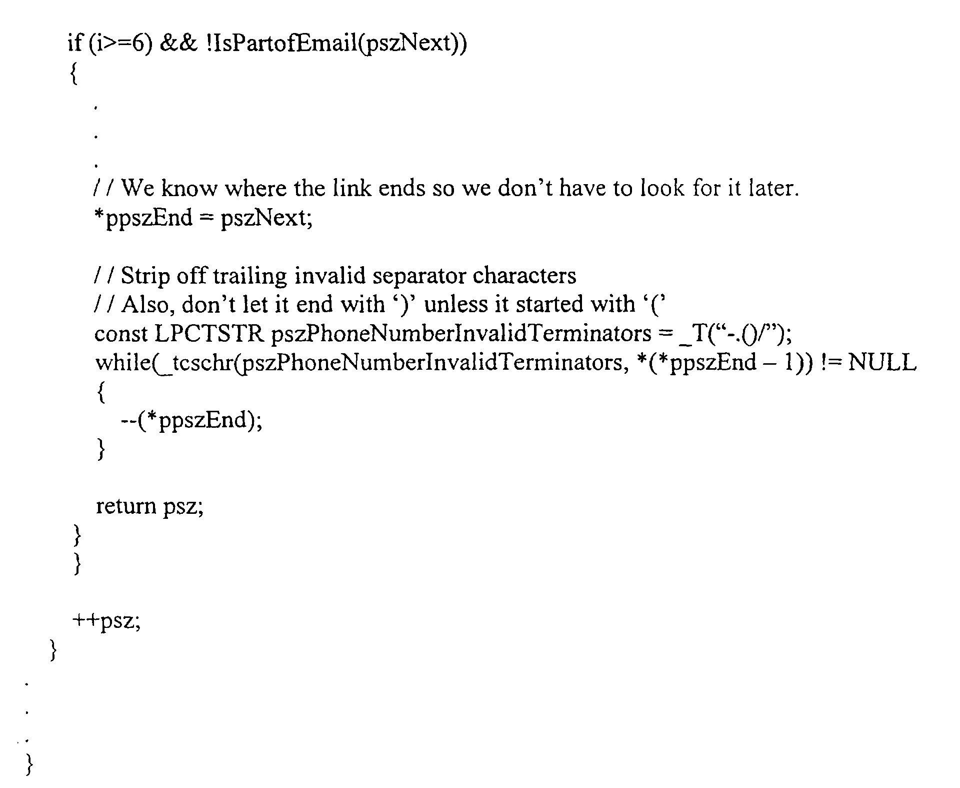

This group of instructions trims extraneous separators from the end of a telephone number. The variable pszPhoneNumberInvalidTerminators is defined as the constant text string "-.()/". A while loop is executed to start at the end of a telephone number checking characters to see if they are extraneous separators. As extraneous separators at the end of the telephone number are found, the address of the last character in the telephone number is decremented. This both eliminates the extraneous separator and facilitates checking the character that is now the end of the telephone number.

By automatically identifying telephone numbers included in electronic text the present invention has the advantage of easily allowing other programs to further process telephone numbers. Such further processing may include hyperlinking an identified telephone number or sending an identified telephone number to an external program. If a telephone number is hyperlinked, the user of a computing device, on which the hyperlink is created, may be able to communicate more efficiently. This communication may include more easily contacting the user of another computing device for voice communications or more easily accessing information on a device that associates the telephone number with a computer address.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

## Claims

1. In an electronic device capable of receiving and storing electronic text that may include telephone numbers, a computerized method for automatically identifying a potential telephone number so as to make the potential telephone number accessible for further use, the method comprising the acts of:
automatically and without user intervention, checking individual text characters included in electronic text to find the start of a potential telephone number;
automatically and without user intervention, checking individual text characters included in electronic text to find the end of the potential telephone number; and
automatically and without user intervention, determining that a portion of the electronic text resembles a telephone number.

2. The method as recited in claim 1, further comprising:
an act of hyperlinking the portion of text that resembles a telephone number.

3. The method as recited in claim 1, wherein the act of checking individual text characters included in electronic text to find the start of a potential telephone number comprises the follow:
an act of checking individual text characters included in a stream of text until a numerical digit is found.

4. The method as recited in claim 1, wherein the act of checking individual text characters included in electronic text to find the start of a potential telephone number comprises the follow:
an act of checking individual text characters included in a body of text until a numerical digit is found.

5. The method as recited in claim 1, wherein the act of checking individual text characters included in electronic text to find the start of a potential telephone number comprises the following:
an act of checking individual text characters included in electronic text to determine if a numerical digit is preceded by a currency symbol.

6. The method as recited in claim 1, wherein the act of checking individual text characters included in electronic text to find the end of the potential telephone number comprises the following:
an act of checking individual text characters subsequent to a character indicating the start of a potential telephone number until locating a stop sequence indicating the end of the potential telephone number.

7. The method as recited in claim 6, wherein the act of checking individual text characters subsequent to a character indicating the start of a potential telephone number until locating a stop sequence indicating the end of the potential telephone number comprises the following:
an act of checking individual characters subsequent to a character indicating the start of a potential telephone number until locating a character that is not a separator character.

8. The method as recited in claim 6, wherein the act of checking individual text characters subsequent to a character indicating the start of a potential telephone number until locating a stop sequence indicating the end of the telephone number comprises the following:
an act of checking individual characters subsequent to a character indicating the start of a potential telephone number until locating subsequent non-numerical separator characters.

9. The method as recited in claim 6, wherein the act of checking individual text characters subsequent to a character indicating the start of a potential telephone number until locating a stop sequence indicating the end of the telephone number comprises the following:
an act of checking individual characters subsequent to a character indicating the start of a potential telephone number until locating a space character preceding a separator character.

10. The method as recited in claim 6, wherein the act of checking individual text characters subsequent to a character indicating the start of a potential telephone number until locating a stop sequence indicating the end of the telephone number comprises the following:
an act of checking individual characters subsequent to a character indicating the start of a potential telephone number until locating a separator character preceding a space character.

11. The method as recited in claim 1, wherein the act of determining that a portion of the electronic text resembles a telephone number comprises the following:
an act of determining that the portion of electronic text resembling a telephone number includes more than a predetermined number of characters.

12. The method as recited in claim 1, wherein the act of determining that a portion of the electronic text resembles a telephone number comprises the following:
an act of determining that the portion of electronic text resembling a telephone number is not representative of a date.

13. The method as recited in claim 1, further comprising:
an act of including in the potential telephone number the character preceding a numerical digit that indicates the start of the portion of electronic text resembling a telephone number.

14. The method as recited in claim 1, further comprising:
an act of removing extraneous whitespace from the portion of electronic text resembling a telephone number.

15. The method as recited in claim 1, wherein checking individual text characters included in electronic text comprises the following:
checking individual text characters included in electronic text that were encoded using the ISO Latin 1 character set.

16. The method as recited in claim 1, wherein checking individual text characters included in electronic text comprises the following:
checking individual text characters included in electronic text that were encoded using the ANSI character set.

17. The method as recited in claim 1, wherein checking individual text characters included in electronic text comprises the following:
checking individual text characters included in electronic text that were encoded using Unicode.

18. In an electronic device capable of receiving and storing electronic text that may include telephone numbers, a computerized method for automatically identifying a potential telephone number so as to make the potential telephone number accessible for further use, the method comprising:
a step for, automatically and without user intervention, locating a text segment of electronic text so as to make the text segment available for further processing by a computing device to determine if the text segment includes a portion of electronic text resembling a telephone number; and
an act of, automatically and without user intervention, determining that a portion of the text segment resembles a telephone number.

19. The method as recited in claim 18, further comprising:
an act of hyperlinking the portion of the text segment that resembles a telephone number.

20. In an electronic device capable of receiving and storing electronic text that may include telephone numbers, a computerized method for automatically identifying a potential telephone number so as to make the potential telephone number accessible for further use, the method comprising the acts of:
searching individual text characters to identifying a text segment within electronic text;
determining that the text segment does not resemble a currency;
determining that the text segment does not resemble an electronic mail address;
determining that the text segment does not resemble an Internet URL;
determining that the text segment does not resemble a date configuration;
determining that the text segment includes more than a predetermined number of characters;
determining that the text segment resembles the form of a known telephone number configuration;
truncating the text segment that resembles the form of a known telephone number configuration to remove extraneous whitespace; and
hyperlinking the text segment.

21. A computer program product for implementing, in an electronic device capable of receiving and storing electronic text, a method for automatically identifying a potential telephone number so as to make the potential telephone number accessible for further use, the computer program product comprising:
a computer-readable medium carrying computer-executable instructions, that when executed at the electronic device, cause the electronic device to perform the method, including the acts of:
checking individual text characters included in electronic text to find the start of a potential telephone number;
checking individual text characters included in electronic text to find the end of the potential telephone number; and
determining that a portion of the electronic text resembles a telephone number.

22. The method as recited in claim 21, wherein the individual text characters included in the electronic text were encoded using the ISO Latin 1 character set.

23. The method as recited in claim 21, wherein the individual text characters included in the electronic text were encoded using the ANSI character set.

24. The method as recited in claim 21, wherein the individual text characters included in the electronic text were encoded using Unicode.

25. The computer program product as recited claim 21, wherein the computer-readable medium is a physical storage media.
